# EUROPEAN PATENT APPLICATION

(11) **EP 4 811 704 A1**
(43) Date of publication of application: **23.09.2026**
(21) Application number: 24892832.7
(22) Date of filing: 15.07.2024
(51) Int. Cl.: H04L 5/00

(54) **COMMUNICATION METHOD AND APPARATUS, AND STORAGE MEDIUM**

(30) Priority: 22.11.2023 CN 202311577687
(71) Applicant: ZTE CORPORATION, Shenzhen, Guangdong 518057 (CN)
(72) Inventor: LU, Zhaohua, Shenzhen, Guangdong 518057 (CN); LIU, Kun, Shenzhen, Guangdong 518057 (CN); CAO, Hua, Shenzhen, Guangdong 518057 (CN); LI, Yong, Shenzhen, Guangdong 518057 (CN); XIAO, Huahua, Shenzhen, Guangdong 518057 (CN)
(74) Representative: Ziebig Hengelhaupt Intellectual Property Attorneys Patentanwaltskanzlei PartGmbB
(86) International application number: PCT/CN2024/105498
(87) International publication number: WO 2025/107668

(57) **Abstract**

The embodiments of the present disclosure relate to the technical field of communications. Provided are a communication method and apparatus, and a storage medium. The communication method comprises: generating configuration information of a first reference signal; and sending the configuration information, wherein the configuration information comprises antenna description information of the first reference signal, the antenna description information is used for indicating a mapping relationship between N antennas of a second node and X antennas of the second node that are used for transmitting the first reference signal, N is greater than or equal to 2 and N is a positive integer, and X is less than or equal to N and X is a positive integer.

## Description

### CROSS-REFERENCE TO RELATED APPLICATION(S)

This application claims priority to Chinese Patent Application No. 202311577687.0, filed with the China National Intellectual Property Administration on November 22, 2023, entitled "COMMUNICATION METHOD AND APPARATUS, AND STORAGE MEDIUM", which is incorporated herein by reference in its entirety.

### TECHNICAL FIELD

The present disclosure relates to the field of communication technologies, and in particular, to a communication method, a device and a storage medium.

### BACKGROUND

In traditional communication systems, antenna transmission and reception capabilities of terminals are not matched with each other. For example, a terminal may receive reference signals on eight receiving antennas simultaneously, but may only simultaneously send reference signals on two transmitting antennas at a time. As a result, the terminal needs to use different transmitting antennas to send reference signals at four different moments, so that the base station is able to obtain complete channel information, resulting in high resource overhead.

Therefore, how to reduce the resource overhead for transmitting reference signals is an urgent problem to be solved.

### SUMMARY

In a first aspect, a communication method is provided. The communication method is applied to a first node and includes: generating configuration information for a first reference signal, the configuration information including antenna description information for the first reference signal, the antenna description information being used to indicate a mapping relationship between N antennas of a second node and X antennas of the second node for transmitting the first reference signal, N being greater than or equal to 2 and N being a positive integer, X being less than or equal to N and X being a positive integer; and transmitting the configuration information.

In a second aspect, another communication method is provided. The communication method is applied to a second node and includes: receiving configuration information for a first reference signal, the configuration information including antenna description information for the first reference signal, the antenna description information being used to indicate a mapping relationship between N antennas of the second node and X antennas of the second node for transmitting the first reference signal, N being greater than or equal to 2 and N being a positive integer, X being less than or equal to N and X being a positive integer; and transmitting the first reference signal based on the configuration information.

In a third aspect, a communication device is provided. The communication device includes: a processing module configured to generate configuration information for a first reference signal, the configuration information including antenna description information for the first reference signal, the antenna description information being used to indicate a mapping relationship between N antennas of a second node and X antennas of the second node for transmitting the first reference signal, N being greater than or equal to 2 and N being a positive integer, X being less than or equal to N and X being a positive integer; and a communication module configured to transmit the configuration information.

In a fourth aspect, another communication device is provided. The communication device includes: a communication module configured to receive configuration information for a first reference signal, the configuration information including antenna description information for the first reference signal, the antenna description information being used to indicate a mapping relationship between N antennas of a second node and X antennas of the second node for transmitting the first reference signal, N being greater than or equal to 2 and N being a positive integer, X being less than or equal to N and X being a positive integer; and a processing module configured to transmit the first reference signal based on the configuration information.

In a fifth aspect, a communication device is provided. The communication device includes a processor. The processor, upon executing a computer program, performs the communication method in the first aspect or the communication method in the second aspect.

In a sixth aspect, a computer-readable storage medium is provided. The computer-readable storage medium includes computer instructions. The computer instructions, upon being executed, performs the communication method in the first aspect or the communication method in the second aspect.

### BRIEF DESCRIPTION OF THE DRAWINGS

In order to more clearly describe technical solutions in the present disclosure, the accompanying drawings to be used in some embodiments of the present disclosure will be introduced briefly below. However, the accompanying drawings to be described below are merely accompanying drawings of some embodiments of the present disclosure, and those of ordinary skill in the art may obtain other drawings according to these drawings.
FIG. 1 is a schematic diagram showing a structure of receiving and transmitting antennas of a terminal provided in embodiments of the present disclosure;
FIG. 2 is a schematic diagram showing an architecture of a communication system provided in embodiments of the present disclosure;
FIG. 3 is a flow chart of a communication method provided in embodiments of the present disclosure;
FIG. 4 is a schematic diagram showing time-domain overlapping of a first reference signal provided in embodiments of the present disclosure;
FIG. 5 is a flow chart of another communication method provided in embodiments of the present disclosure;
FIG. 6 is a schematic diagram showing a structure of receiving and transmitting antennas of a terminal provided in embodiments of the present disclosure;
FIG. 7 is a schematic diagram showing transmission time of a sounding reference signal provided in embodiments of the present disclosure;
FIG. 8 is a schematic diagram showing yet another structure of receiving and transmitting antennas of a terminal provided in embodiments of the present disclosure;
FIG. 9 is a schematic diagram showing another transmission time of a sounding reference signal provided in embodiments of the present disclosure;
FIG. 10 is a schematic diagram showing a structure of a communication device provided in embodiments of the present disclosure;
FIG. 11 is a schematic diagram showing a structure of another communication device provided in embodiments of the present disclosure; and
FIG. 12 is a schematic diagram showing a structure of yet another communication device provided in embodiments of the present disclosure.

### DETAILED DESCRIPTION

The technical solutions in the embodiments of the present disclosure are clearly and completely described below with reference to the accompanying drawings in the embodiments of the present disclosure. However, the described embodiments are merely some, but not all, embodiments of the present disclosure. All other embodiments obtained based on the embodiments of the present disclosure by those of ordinary skill in the art without paying any creative effort will fall within the protection scope of the present disclosure.

In the description of the present disclosure, unless otherwise specified, the symbol "/" means "or", for example, "A/B" may mean A or B. Herein, "and/or" is merely an associated relationship for describing associated objects, which means that there may be three relationships, for example, "A and/or B" may mean: only A, A and B at the same time, and only B. In addition, the term such as "at least one" means one or more, and the term such as "a/the plurality of" means two or more. Terms such as "first" and "second" do not limit the number and execution order, and do not necessarily indicate that the objects defined by the terms are different.

It will be noted that, in the present disclosure, the term such as "exemplary" or "for example" is used to represent examples, illustrations, or explanations. Any embodiment or design scheme described with "exemplary" or "for example" in the present disclosure is not necessarily to be construed as preferred or advantageous over other embodiments or design schemes. Rather, the use of the term such as "exemplary" or "for example" is intended to present related concepts in a specific manner.

As described in the background, antenna transmission and reception capabilities of terminals are not matched with each other. The number of reference signals that the terminal is capable of receiving simultaneously is greater than the number of reference signals that the terminal is capable of transmitting simultaneously. In other words, the terminal needs to transmit reference signals multiple times, so as to enable the base station to obtain complete channel information.

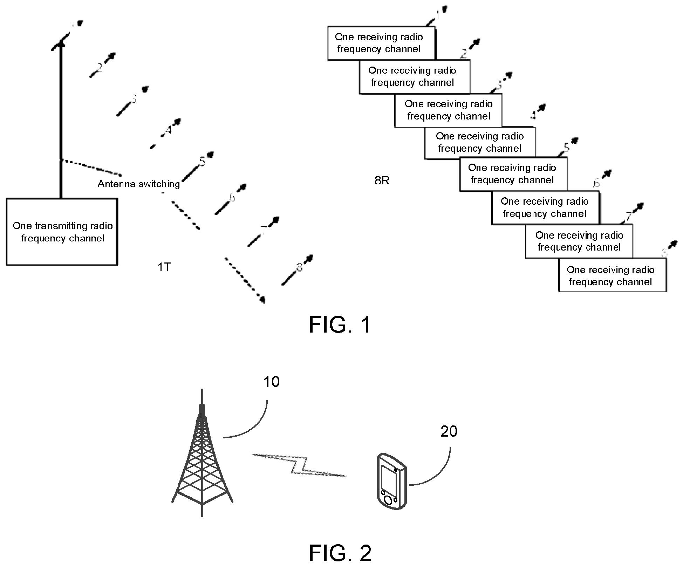

For example, as shown in FIG. 1, in an example where a terminal is capable of using only one transmitting antenna to transmit a reference signal at a time and using eight receiving antennas to receive reference signals, the configuration of the terminal may also be described as one transmitter and eight receivers, 1T8R. The terminal shown in FIG. 1 has eight transmitting antennas, eight receiving antennas, one transmitting radio frequency channel, and eight receiving radio frequency channels. This means that the terminal can use only one transmitting antenna to send a reference signal at a time. To enable the base station to obtain complete channel information, the terminal is required to send the reference signal eight times using different transmitting antennas. The resource overhead is high and the transmission efficiency is low in the reference signal transmission process described above.

Based on this, a communication method is provided in the embodiments of the present disclosure. In the communication method, a first node sends configuration information for a first reference signal to a second node, so that the second node transmits the first reference signal based on the configuration information for the first reference signal. The configuration information includes antenna description information for the first reference signal. The antenna description information is used to indicate a mapping relationship between antennas of the second node and antennas of the second node for transmitting the first reference signal. Based on the mapping relationship, the second node may select an antenna for transmitting the first reference signal. Compared with the related art in which the second node uses all antennas to transmit the first reference signal, the embodiments of the present disclosure may reduce the resource overhead for transmitting the first reference signal and improve the flexibility in transmitting the first reference signal, thereby improving the transmission efficiency of the first reference signal.

The communication method provided in the present disclosure may be applied to a communication system shown in FIG. 2, FIG. 2 is a schematic diagram showing an architecture of a communication system provided in the embodiments of the present disclosure. As shown in FIG. 2, the communication system includes a first node 10 and a second node 20.

In a wireless communication scenario, the first node 10 communicates with the second node 20 via a radio channel. For example, the first node 10 is a base station, and the second node 20 is a terminal. The base station communicates with the terminal via the radio channel. For another example, the first node 10 is a terminal, and the second node 20 is a wireless router. The wireless router communicates with the terminal via the radio channel. For another example, the first node 10 is a first base station, and the second node 20 is a second base station. The first base station communicates with the second base station via the radio channel. For another example, the first node 10 is a first terminal, and the second node 20 is a second terminal. The first terminal communicates with the second terminal via the radio channel. For another example, the first node 10 is a relay, and the second node 20 is a base station. The base station communicates with the relay via the radio channel. For another example, the first node 10 is a terminal, and the second node 20 is a relay. The relay communicates with the terminal via the radio channel. For another example, the first node 10 is a first relay, and the second node 20 is a second relay. The first relay communicates with the second relay via the radio channel. For another example, the first node 10 is a base station, and the second node 20 is a satellite. The satellite communicates with the base station via the radio channel. For another example, the first node 10 is a satellite, and the second node 20 is a base station. The base station communicates with the satellite via the radio channel. For another example, the first node 10 is a terminal, and the second node 20 is a satellite. The satellite communicates with the terminal via the radio channel. For another example, the first node 10 is a satellite, and the second node 20 is a terminal. The terminal communicates with the satellite via the radio channel. For another example, the first node 10 is a ground device, and the second node 20 is an airborne vehicle. The airborne vehicle communicates with the ground device via the radio channel. For another example, the first node 10 is a first airborne vehicle, and the second node 20 is a second airborne vehicle. The first airborne vehicle communicates with the second airborne vehicle via the radio channel.

The embodiments of the present disclosure are mainly described by considering an example in which the first node 10 is a base station and the second node 20 is a terminal.

In some embodiments, the first node 10 is configured to provide radio access services to a plurality of terminals. Specifically, a base station provides a service coverage area (also referred to as a cell). Terminals entering this area may communicate with the base station via wireless signals, to receive radio access services provided by the base station.

In some embodiments, the first node 10 may be a base station or an evolutional node B (eNB or eNodeB) in long term evolution (LTE) or long term evolution advanced (LTE-A), a base station device in a 5G network, or a base station in a future communication system. The base station may include a variety of network-side devices such as a variety of macro base stations, micro base stations, home base stations, wireless remote devices, reconfigurable intelligent surfaces (RISs), routers, and wireless fidelity (Wi-Fi) devices.

In some embodiments, the second node 20 may be a device with transceiving functions. The second node 20 may be deployed on land (including an indoor or outdoor, handheld, wearable or vehicle-mounted scenario). The second node 20 may also be deployed on water (e.g., on a ship). The second node 20 may also be deployed in the air (e.g., on an airplane, on a balloon and on a satellite). The terminal may be a mobile phone, a pad, a computer with wireless transceiving functions, a virtual reality (VR) terminal, an augmented reality (AR) terminal, a wireless terminal in industrial control, a wireless terminal in self driving, a wireless terminal in a remote medical system, a wireless terminal in a smart grid, a wireless terminal in transportation safety, a wireless terminal in a smart city, a wireless terminal in a smart home, etc. The embodiments of the present disclosure do not limit the application scenarios. The terminal may sometimes also be referred to as a user, user equipment (UE), an access terminal, a UE unit, a UE station, a mobile station, a mobile platform, a remote station, a remote terminal, a mobile device, a UE terminal, a wireless communication device, a UE agent, or a UE device, etc., and the embodiments of the present disclosure are not limited thereto.

It will be noted that, FIG. 2 is only an exemplary architecture diagram, and the number of devices and names of the various devices included in FIG. 2 are not limited, and in addition to the devices shown in FIG. 2, the communication system may further include other devices, such as a core network device.

The embodiments of the present disclosure do not limit the application scenarios. The system architectures and the service scenarios described in the embodiments of the present disclosure are intended to more clearly explain the technical solutions in the embodiments of the present disclosure, and do not constitute a limitation on the technical solutions provided in the embodiments of the present disclosure. Those of ordinary skill in the art will know that, with the evolution of network architectures and the emergence of new service scenarios, the technical solutions provided in the embodiments of the present disclosure are also applicable to similar technical problems.

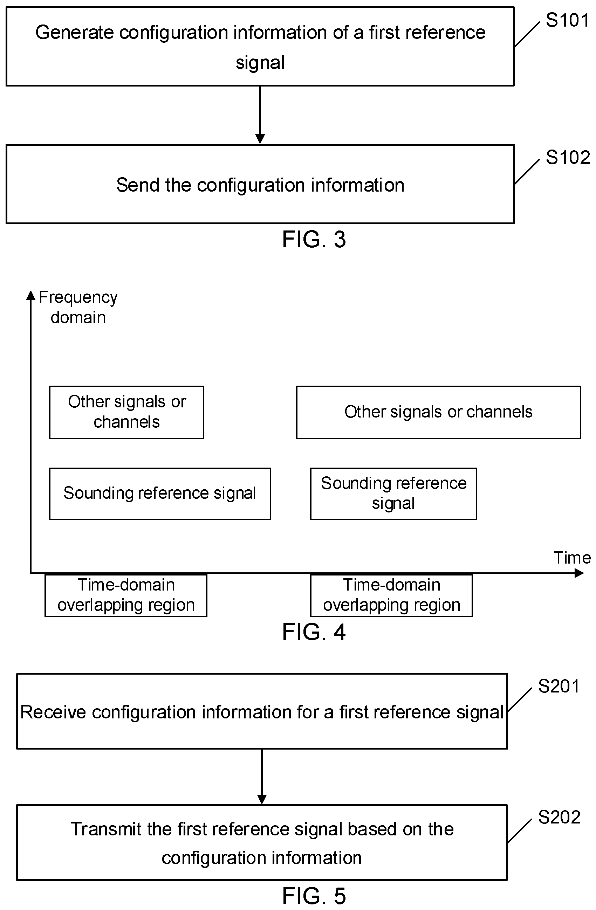

FIG. 3 is a flow chart of a communication method provided in the embodiments of the present disclosure. As shown in FIG. 3, the communication method is applied to the first node and includes the following steps.

In S101, configuration information for a first reference signal is generated.

In some embodiments, in response to the first node needing to acquire channel information between the first node and the second node, the first node begins to generate the configuration information for the first reference signal.

It will be understood that the channel information of the channel between the first node and the second node is determined based on the first reference signal transmitted by the second node. However, in the embodiments of the present disclosure, the second node needs to transmit the first reference signal based on the configuration information for the first reference signal. Therefore, in response to the first node needing to acquire the channel information between the first node and the second node, the first node starts generating the configuration information for the first reference signal, so that the second node may transmit the first reference signal based on the configuration information for the first reference signal, thereby enabling the first node to acquire the channel information between the first node and the second node based on the first reference signal.

In some embodiments, the first node receives antenna configuration information of the second node sent by the second node, so as to generate the configuration information for the first reference signal based on the antenna configuration information.

The antenna configuration information includes at least one of: implementations of antennas, position information of antennas, topology structures of antennas, or materials of antennas.

In some embodiments, the configuration information includes antenna description information for the first reference signal. The antenna description information is used to indicate a mapping relationship between N antennas of the second node and X antennas of the second node for transmitting the first reference signal. Herein, N is greater than or equal to 2 and N is a positive integer; X is less than or equal to N and X is a positive integer.

For example, in an example where the terminal shown in FIG. 1 is the second node, the N antennas of the second node include the eight transmitting antennas of the terminal in FIG. 1, and the X antennas of the second node for transmitting the first reference signal include the antennas actually used by the terminal in FIG. 1 when transmitting the first reference signal.

In some embodiments, the first node receives suggested antenna description information sent by the second node, so as to generate the antenna description information for the first reference signal based on the suggested antenna description information.

In some embodiments, the mapping relationship indicated by the antenna description information may be used for configuring antenna information of the second node when transmitting the first reference signal.

For example, the antenna description information includes the number of antennas and antenna sequence numbers used by the second node for transmitting the first reference signal. For example, the antenna description information includes that the number of antennas used by the second node for transmitting the first reference signal is four, and the antenna sequence numbers used by the second node for transmitting the first reference signal include transmitting antenna 1, transmitting antenna 2, transmitting antenna 3 and transmitting antenna 4. After receiving the configuration information for the first reference signal sent by the first node, the second node uses, based on the antenna description information for the first reference signal in the configuration information, the transmitting antenna 1, the transmitting antenna 2, the transmitting antenna 3 and the transmitting antenna 4 to transmit the first reference signal.

For another example, in an example where the terminal shown in FIG. 1 is the second node, the configuration of the terminal includes one receiver and eight transmitters. The terminal is required to use eight antennas to transmit the first reference signal at different moments when transmitting the first reference signal. In the embodiments of the present disclosure, in response to the antenna description information including that the number of antennas used by the terminal for transmitting the first reference signal is four, and the antenna sequence numbers include transmitting antenna 1, transmitting antenna 2, transmitting antenna 3 and transmitting antenna 4, the terminal is only required to transmit the first reference signal by using the four transmitting antennas at different times when transmitting the first reference signal.

In this way, by sending the configuration information for the first reference signal to the second node, the second node is enabled to use a small number of transmitting antennas to transmit the first reference signal when transmitting the first reference signal based on the configuration information, thereby reducing the resource overhead for transmitting the first reference signal and improving the transmission efficiency of the first reference signal.

In some embodiments, frequency-domain resources used by Z of the X antennas for transmitting the first reference signal are less than or equal to frequency-domain resources used by the remaining (X - Z) antennas (i.e., antennas other than the Z antennas among the X antennas) of the X antennas for transmitting the first reference signal.

For example, the first node may allocate frequency-domain resources to each of the X antennas based on frequency-domain channel conditions corresponding to the transmitting antennas of the second node.

It will be noted that Z described in this embodiment and the embodiments below satisfies the following conditions: Z is less than or equal to X, and Z is a positive integer. The present disclosure will not repeat this hereinafter.

In this way, limited frequency-domain resources may, based on the transmission condition of each antenna, be effectively allocated to the transmitting antennas for transmitting the first reference signal, thereby improving the utilization of the frequency-domain resources and reducing the frequency-domain resource overhead for transmitting the first reference signal.

In some embodiments, time-domain resources used by Z of the X antennas for transmitting the first reference signal are less than or equal to time-domain resources used by the remaining (X - Z) of the X antennas for transmitting the first reference signal.

For example, the first node may allocate time-domain resources to each of the X antennas based on time-domain channel conditions corresponding to the transmitting antennas of the second node.

In this way, time-domain resources may be rationally allocated to the transmitting antennas for transmitting the first reference signal, so that the second node may utilize the time-domain resources effectively, and the second node may transmit a lot of first reference signals within the same time period by allocating the time-domain resources, thereby improving the transmission efficiency of the first reference signal.

In some embodiments, transmission resources used by Z of the X antennas for transmitting the first reference signal are less than or equal to transmission resources used by the remaining (X - Z) of the X antennas for transmitting the first reference signal.

The transmission resources include frequency-domain resources and time-domain resources. For example, the first node may allocate transmission resources to each of the X antennas based on frequency-domain channel conditions and time-domain channel conditions corresponding to the transmitting antennas of the second node.

In this way, the transmission efficiency of the first reference signal may be improved comprehensively. In the frequency domain, the utilization of frequency-domain resources may be improved by flexibly allocating the frequency-domain resources. In the time domain, the utilization of time-domain resources may be improved by rationally allocating the time-domain resources.

In some embodiments, transmission powers used by Z of the X antennas for transmitting the first reference signal are less than or equal to transmission powers used by the remaining (X - Z) of the X antennas for transmitting the first reference signal.

For example, the first node may allocate a transmission power to each of the X antennas based on a capability, transmission purpose, transmission channel of each of the X antennas.

In this way, by rationally allocating transmission power of the transmitting antennas for transmitting the first reference signal, the utilization of transmission power may be improved, interference among antennas may be reduced, the transmission quality of the first reference signal may be improved, and unnecessary consumption may be reduced.

In some embodiments, a generation mode for the first reference signal transmitted by at least one of the X antennas is a first sequence generation mode, and a generation mode for the first reference signal transmitted by at least one of the X antennas is a second sequence generation mode. The first sequence generation mode is different from the second sequence generation mode.

The first sequence generation mode is different from the second sequence generation mode. For example, the first sequence generation mode may be a pseudo-random Gold sequence generation mode or a chirp sequence generation mode for frequency modulated signals. The second sequence may be a pseudo-random Gold sequence generation mode or a chirp sequence generation mode for frequency modulated signals.

It will be noted that the present disclosure does not limit the generation mode for the first reference signal, and there are at least two generation modes for X first reference signals transmitted by the X antennas. For example, in an example where X is equal to 4, a generation mode for a first reference signal transmitted by the transmitting antenna 1 may be a first sequence generation mode, a generation mode for a first reference signal transmitted by the transmitting antenna 2 may be a second sequence generation mode, a generation mode for a first reference signal transmitted by the transmitting antenna 3 may be a third sequence generation mode, and a generation mode for a first reference signal transmitted by the transmitting antenna 4 may be a fourth sequence generation mode. The first sequence generation modes are different from each other.

In this way, diverse transmissions may be achieved by transmitting the first reference signals with different generation sequences, thereby improving the signal coverage and anti-interference capability. Moreover, the first reference signals with different generation sequences may be transmitted via different paths during transmission, which helps to overcome interference among multiple first reference signals.

In some embodiments, in response to Z of the X antennas failing to transmit the first reference signal, the first node receives the first reference signal retransmitted by the second node using the Z antennas. In this way, redundant transmission paths may be provided by retransmitting the first reference signal via the Z antennas of the second node, which helps to overcome the initial transmission failure and improves the reliability and robustness of the first reference signal.

In some embodiments, a second reference signal is used for path loss calculation for at least one of the X antennas transmitting the first reference signal, and a third reference signal is used for path loss calculation for at least one of the X antennas transmitting the first reference signal.

The second reference signal is different from the third reference signal. For example, the second reference signal may include a channel state information - reference signal (CSI-RS), a synchronization signal, a demodulation-reference signal (DM-RS), and a positioning reference signal (PRS). The third reference signal may include a CSI-RS, a DM-RS, a synchronization signal, and a PRS.

It will be noted that the present disclosure does not limit the reference signal used for path loss calculation during transmission of the first reference signal, and upon the X antennas transmitting the first reference signal, at least two reference signals are used for path loss calculation. For example, in an example where X is equal to 4, in response to the transmitting antenna 1 transmitting the first reference signal, the CSI-RS is used for path loss calculation; in response to the transmitting antenna 3 transmitting the first reference signal, the PRS is used for path loss calculation; in response to the transmitting antenna 5 transmitting the first reference signal, the synchronization signal is used for path loss calculation; and in response to the transmitting antenna 7 transmitting the first reference signal, the DM-RS is used for path loss calculation.

In this way, by using different reference signals to calculate the path loss during transmission of the first reference signal, the diversity of calculation may be improved, errors in the calculation process may be reduced, and the path loss may be evaluated accurately.

In some embodiments, the first reference signal includes a sounding reference signal.

The sounding reference signal (SRS) is used to measure frequency-domain information of an uplink channel, so that frequency-domain resources are selectively scheduled based on a measurement result. The SRS may also be used to measure a downlink channel, so that downlink channel preprocessing is performed based on a measurement result.

In some embodiments, the configuration information further includes at least one of: priority information of the first reference signal, resource information of the first reference signal, sequence information of the first reference signal, or power information of the first reference signal.

The priority information includes at least one of: a priority relationship between the first reference signal and a signal transmitted on a physical uplink control channel; a priority relationship between the first reference signal and a demodulation reference signal; a priority relationship between the first reference signal and a phase tracking reference signal; or a priority relationship among a plurality of types of first reference signals.

For example, as shown in FIG. 4, in an example where the first reference signal includes the sounding reference signal, the sounding reference signal has an overlapping region with other physical uplink channels or signals on orthogonal frequency division multiplexing (OFDM) in the time domain. The first node may determine priority information of the sounding reference signal based on actual transmission requirements, network load, and quality of service (QoS) of services.

For example, a transmission priority of the sounding reference signal (which is transmitted periodically, semi-persistently, or aperiodically) is higher than a transmission priority of a physical uplink control channel carrying channel state information, and the transmission priority of the sounding reference signal is higher than a transmission priority of a physical uplink control channel carrying only a scheduling request.

For another example, in response to a physical uplink data channel not carrying uplink control information (UCI), the transmission priority of the sounding reference signal (which is transmitted periodically, semi-persistently, or aperiodically) is higher than a transmission priority of the physical uplink data channel on OFDM symbols that overlap with each other in the time domain.

For another example, in response to a physical uplink data channel carrying UCI, and the sounding reference signal overlapping with an OFDM symbol carrying UCI, a priority of the sounding reference signal (which is transmitted periodically, semi-persistently, or aperiodically) is lower than a priority of the physical uplink data channel on the OFDM symbol.

For another example, in response to the sounding reference signal (which is transmitted periodically, semi-persistently, or aperiodically) and the demodulation reference signal using different spatial filters (or different transmitting beams), the transmission priority of the sounding reference signal is lower than a transmission priority of the demodulation reference signal.

For another example, in response to the sounding reference signal (which is transmitted periodically, semi-persistently, or aperiodically) and the demodulation reference signal using the same spatial filter (or the same transmitting beam), the transmission priority of the sounding reference signal is higher than the transmission priority of the demodulation reference signal.

For another example, the transmission priority of the sounding reference signal is lower than a transmission priority of the phase tracking reference signal.

For another example, in response to an uplink load being less than a downlink network load, a transmission priority of a sounding reference signal used for antenna switching is higher than a transmission priority of a sounding reference signal used for uplink data channel transmission.

For another example, in response to the uplink load being greater than the downlink network load, the priority of the sounding reference signal used for antenna switching is lower than the transmission priority of the sounding reference signal used for uplink data channel transmission.

In some embodiments, the resource information of the first reference signal is used to indicate a transmission resource configured by the second node for each antenna for transmission of the first reference signal.

In some embodiments, the sequence information of the first reference signal is used to indicate a generation sequence of the first reference signal transmitted by each antenna configured by the second node for transmission of the first reference signal.

In some embodiments, the resource information of the first reference signal is used to indicate a transmission power configured by the second node for each antenna for transmission the first reference signal.

In S102, the configuration information is transmitted.

In some embodiments, the first node immediately sends the configuration information to the second node after generating the configuration information for the first reference signal.

In some other embodiments, in response to the second node needing to transmit the first reference signal, the second node sends a configuration information request to the first node, to request the first node to send the configuration information for the first reference signal. Correspondingly, in response to the first node receiving the configuration information request sent by the second node, the first node sends the configuration information for the first reference signal to the second node.

In this way, by sending the configuration information for the first reference signal to the second node, the second node is enabled to transmit the first reference signal based on the configuration information for the first reference signal. The configuration information includes antenna description information for the first reference signal. The antenna description information is used to indicate a mapping relationship between antennas of the second node and antennas of the second node for transmitting the first reference signal. Based on the mapping relationship, the second node may select an antenna for transmitting the first reference signal. Compared with the related art in which the second node uses all antennas to transmit the first reference signal, the embodiments of the present disclosure may reduce the resource overhead for transmitting the first reference signal and improve the flexibility in transmitting the first reference signal, thereby improving the transmission efficiency of the first reference signal.

FIG. 5 is a flow chart of another communication method provided in the present disclosure. As shown in FIG. 3, the communication method is applied to the second node and includes the following steps.

In S201, configuration information for a first reference signal is received.

In some embodiments, the first node sends antenna configuration information of the second node to the second node, so that the first node generates the configuration information for the first reference signal based on the antenna configuration information.

For example, the antenna configuration information includes at least one of: implementations of antennas, position information of antennas, topology structures of antennas, or materials of antennas.

In some embodiments, the configuration information includes antenna description information for the first reference signal. The antenna description information is used to indicate a mapping relationship between N antennas of the second node that are capable of transmitting the first reference signal and X antennas of the second node that are used for transmitting the first reference signal. Herein, N is greater than or equal to 2 and N is a positive integer; X is less than or equal to N and X is a positive integer.

In some embodiments, the second node sends suggested antenna description information, so that the first node generates the antenna description information for the first reference signal based on the suggested antenna description information.

The suggested antenna description information is used to instruct the first node to generate the antenna description information for the first reference signal based on the suggested antenna description information. For example, the suggested antenna description information may be antenna description information needed by the terminal and matching antenna configuration information of the terminal. For example, the terminal is configured with one transmitter and eight receivers, and the antenna description information suggested to the base station and to be subsequently sent is used to instruct the terminal to use the transmitting antenna 1, the transmitting antenna 2, the transmitting antenna 3 and the transmitting antenna 4 to transmit the first reference signal.

In S202, the first reference signal is transmitted based on the configuration information.

In some embodiments, the configuration information includes antenna description information for the first reference signal. The antenna description information is used to indicate a mapping relationship between N antennas of the second node and X antennas of the second node for transmitting the first reference signal. Herein, N is greater than or equal to 2 and N is a positive integer; X is less than or equal to N and X is a positive integer.

In response to the second communication node using the X antennas to transmit the first reference signal, the second communication node may select at most Y antennas to simultaneously transmit the first reference signal.

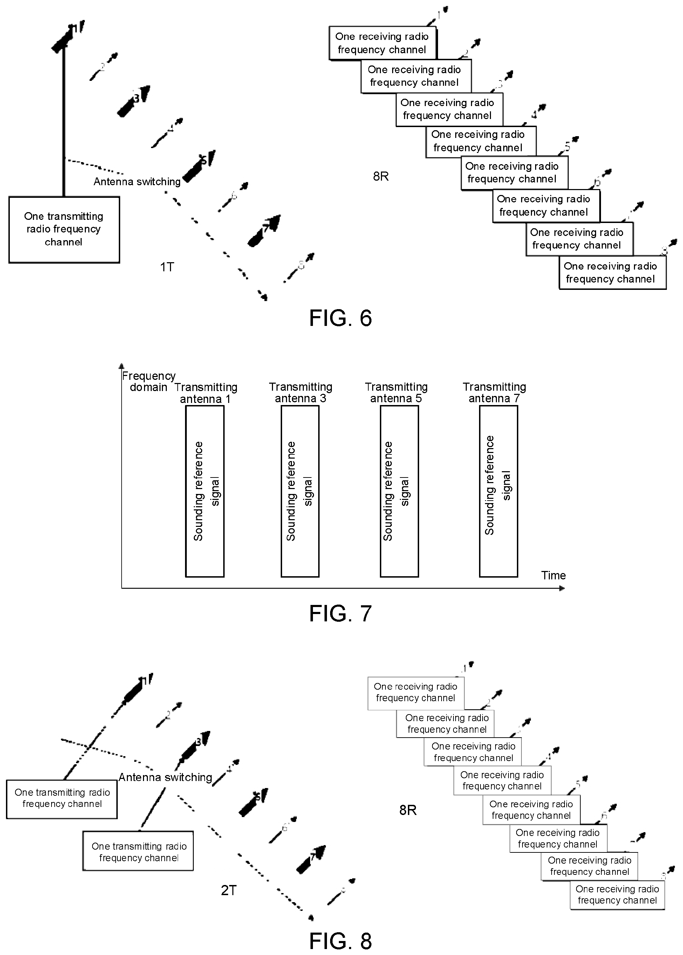

For example, in an example where the terminal is configured with one transmitter and eight receivers, in the related art, the terminal needs to use eight antennas to transmit the first reference signal at different moments. In the embodiments of the present disclosure, as shown in FIG. 6, if the antenna description information indicates that the second node uses four transmitting antennas to transmit the first reference signal, the antenna numbers of the transmitting antennas include transmitting antenna 1, transmitting antenna 3, transmitting antenna 5 and transmitting antenna 7, respectively. As shown in FIG. 7, in an example where the first reference signal includes the sounding reference signal, the terminal transmitting the sounding reference signal based on the configuration information may be specifically described as follows: the terminal uses the transmitting antenna 1 to transmit the sounding reference signal for the first time, uses the transmitting antenna 3 to transmit the sounding reference signal for the second time, uses the transmitting antenna 5 to transmit the sounding reference signal for the third time, and uses the transmitting antenna 7 to transmit the sounding reference signal for the fourth time. In this case, N is equal to 8, X is equal to 4, and Y is equal to 1.

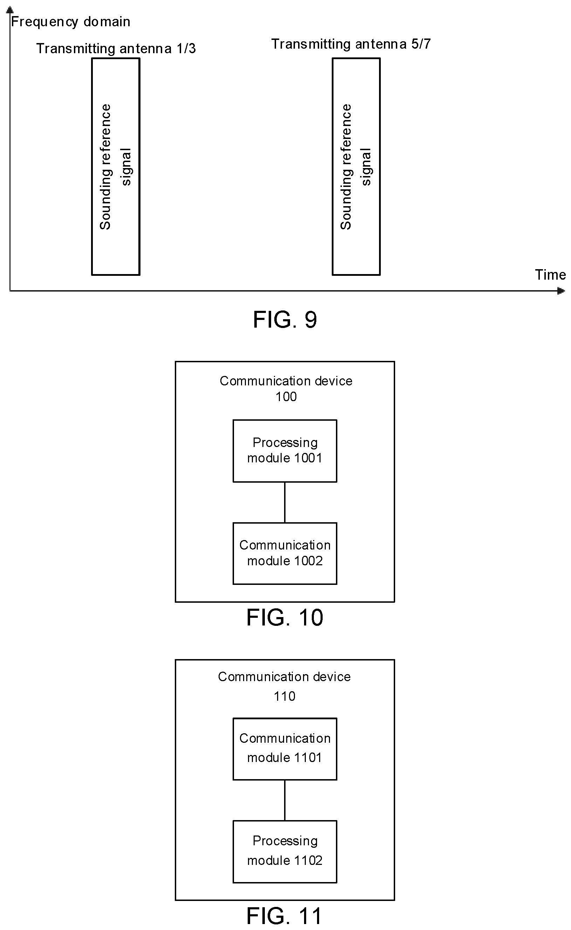

For another example, in an example where the terminal is configured with two transmitters and eight receivers, as shown in FIG. 8, if the antenna description information indicates that the second node uses four transmitting antennas to transmit the first reference signal, the antenna numbers of the transmitting antennas include transmitting antenna 1, transmitting antenna 3, transmitting antenna 5 and transmitting antenna 7, respectively. As shown in FIG. 9, in an example where the first reference signal includes the sounding reference signal, the terminal transmitting the sounding reference signal based on the configuration information may be specifically described as follows: the terminal uses the transmitting antenna 1 and transmitting antenna 3 to transmit the sounding reference signal for the first time, and uses the transmitting antenna 5 and transmitting antenna 7 to transmit the sounding reference signal for the second time. In this case, N is equal to 8, X is equal to 4, and Y is equal to 2.

In some embodiments, frequency-domain resources used by Z of the X antennas for transmitting the first reference signal are less than or equal to frequency-domain resources used by the remaining (X - Z) of the X antennas for transmitting the first reference signal.

For example, the frequency-domain resources may include subcarriers. Considering the terminal shown in FIG. 6 as an example, in response to the first node determining, based on frequency-domain channel conditions, that a frequency-domain channel corresponding to the transmitting antenna 1 is relatively flat, the second node allocates 20 subcarriers to the first reference signal transmitted by the transmitting antenna 1, and allocates 40 subcarriers to each of the second reference signals transmitted by the transmitting antenna 3, transmitting antenna 5 and transmitting antenna 7. In this case, X is equal to 4 and Z is equal to 1. In response to the first node determining, based on frequency-domain channel conditions, that frequency-domain channels corresponding to the transmitting antenna 1 and transmitting antenna 5 are relatively flat, the second node allocates 20 subcarriers to each of the first reference signals transmitted by the transmitting antenna 1 and transmitting antenna 5, and allocates 40 subcarriers to each of the second reference signals transmitted by the transmitting antenna 3 and transmitting antenna 7. In this case, X is equal to 4 and Z is equal to 2.

In some embodiments, time-domain resources used by Z of the X antennas for transmitting the first reference signal are less than or equal to time-domain resources used by the remaining (X - Z) of the X antennas for transmitting the first reference signal.

For example, the time-domain resources may include OFDM symbols. Considering the terminal shown in FIG. 6 as an example, in response to the first node determining, based on time-domain channel conditions, that a time-domain channel corresponding to the transmitting antenna 1 is relatively flat, the second node allocates one OFDM symbol to the first reference signal transmitted by the transmitting antenna 1, and allocates two OFDM symbols to each of the second reference signals transmitted by the transmitting antenna 3, transmitting antenna 5 and transmitting antenna 7. In this case, X is equal to 4 and Z is equal to 1.

In response to the first node determining, based on time-domain channel conditions, that time-domain channels corresponding to the transmitting antenna 1 and transmitting antenna 5 are relatively flat, the second node allocates one OFDM symbol to each of the first reference signals transmitted by the transmitting antenna 1 and transmitting antenna 5, and allocates two OFDM symbols to each of the second reference signals transmitted by the transmitting antenna 3 and transmitting antenna 7. In this case, X is equal to 4 and Z is equal to 2.

In some embodiments, transmission resources used by Z of the X antennas for transmitting the first reference signal are less than or equal to transmission resources used by the remaining (X - Z) of the X antennas for transmitting the first reference signal.

For example, the transmission resources include frequency-domain resources and time-domain resources. The frequency-domain resources may include subcarriers, and the time-domain resources may include OFDM symbols. Considering the terminal shown in FIG. 6 as an example, in response to the first node determining, based on channel conditions, that a channel corresponding to the transmitting antenna 1 is relatively flat, the second node allocates one OFDM symbol (one OFDM symbol with 20 subcarriers) to the first reference signal transmitted by the transmitting antenna 1, and allocates two OFDM symbols (one OFDM symbol with 20 subcarriers) to each of the second reference signals transmitted by the transmitting antennas 3, transmitting antennas 5 and transmitting antennas 7. In this case, X is equal to 4 and Z is equal to 1. In response to the first node determining, based on channel conditions, that channels corresponding to the transmitting antenna 1 and transmitting antenna 5 are relatively flat, the second node allocates one OFDM symbol (one OFDM symbol with 20 subcarriers) to each of the first reference signals transmitted by the transmitting antenna 1 and transmitting antenna 5, and allocates two OFDM symbols (one OFDM symbol with 20 subcarriers) to each of the second reference signals transmitted by the transmitting antenna 3 and transmitting antenna 7. In this case, X is equal to 4 and Z is equal to 2.

In some embodiments, transmission powers used by Z of the X antennas for transmitting the first reference signal are less than or equal to transmission powers used by the remaining (X - Z) of the X antennas for transmitting the first reference signal.

For example, considering the terminal shown in FIG. 6 as an example, in response to the first node determining, based on capabilities, transmission purposes, transmission channels of four transmitting antenna, that the transmitting antenna 1 requires relatively low transmission power, the second node allocates a lower transmission power to the transmitting antenna 1 than to the transmitting antenna 3, transmitting antenna 5 and transmitting antenna 7. In this case, X is equal to 4 and Z is equal to 1.

In some embodiments, a generation mode for the first reference signal transmitted by at least one of the X antennas is a first sequence generation mode, and a generation mode for the first reference signal transmitted by at least one of the X antennas is a second sequence generation mode.

The first sequence generation mode is different from the second sequence generation mode.

For example, the first sequence may be a pseudo-random Gold sequence or a chirp sequence for frequency-modulated signals. The second sequence may be a pseudo-random Gold sequence or a chirp sequence for frequency-modulated signals. Considering the terminal shown in FIG. 6 as an example, the second node uses the transmitting antenna 1 to transmit a first reference signal generated using a first sequence generation mode, the transmitting antenna 3 to transmit a first reference signal generated using a second sequence generation mode, the transmitting antenna 5 to transmit a first reference signal generated using a fourth sequence generation mode, and the transmitting antenna 7 to transmit the first reference signal generated using the fourth sequence generation mode. The first sequence generation mode, the second sequence generation mode, the third sequence generation mode, and the fourth sequence generation mode are all different from each other.

In some embodiments, in response to Z of the X antennas failing to transmit the first reference signal, the first reference signal is retransmitted using the Z antennas.

For example, considering the terminal shown in FIG. 6 as an example, in a case where the second node uses the transmitting antenna 1 to transmit the first reference signal, an uplink OFDM symbol is configured as a downlink OFDM symbol by the second node, resulting in a transmission failure. In a case where the second node uses the transmitting antenna 3 to transmit the first reference signal, an uplink OFDM symbol is occupied by other channels, resulting in a transmission failure. Thus, the second node retransmits the first reference signal using the transmitting antenna 1 and transmitting antenna 3. In this case, X is equal to 4 and Z is equal to 2.

It will be noted that whether to retransmit the first reference signal is determined by the second node according to a preset rule. This preset rule may be determined by the second node or determined by negotiation between the first node and the second node.

In some embodiments, a second reference signal is used for path loss calculation for at least one of the X antennas transmitting the first reference signal, and a third reference signal is used for path loss calculation for at least one of the X antennas transmitting the first reference signal.

The second reference signal is different from the third reference signal.

For example, considering the terminal shown in FIG. 6 as an example, different transmitting antennas of the terminal point to receiving antennas of the base station at different positions, and the reference signals used in calculating the path loss may be different for different transmitting antennas. The second reference signal may include a CSI-RS, a DM-RS, a synchronization signal, and a PRS. The third reference signal may include a CSI-RS, a DM-RS, a synchronization signal, and a PRS. In response to the second node using the transmitting antenna 1 to transmit the first reference signal, the second node uses the CSI-RS to calculate a path loss. In response to the second node using the transmitting antenna 3 to transmit the first reference signal, the second node uses the DM-RS to calculate a path loss. In response to the second node using the transmitting antenna 5 to transmit the first reference signal, the second node uses the synchronization signal to calculate a path loss. In response to the second node using the transmitting antenna 7 to transmit the first reference signal, the second node uses the PRS to calculate a path loss.

In some embodiments, the first reference signal includes a sounding reference signal.

In some embodiments, the configuration information further includes at least one of: priority information of the first reference signal, resource information of the first reference signal, sequence information of the first reference signal, or power information of the first reference signal.

In some embodiments, the priority information includes at least one of: a priority relationship between the first reference signal and a signal transmitted on a physical uplink control channel; a priority relationship between the first reference signal and a demodulation reference signal; a priority relationship between the first reference signal and a phase tracking reference signal; or a priority relationship among a plurality of types of first reference signals.

In some embodiments, the resource information of the first reference signal is used to indicate a transmission resource configured by the second node for each antenna for transmission of the first reference signal.

In some embodiments, the sequence information of the first reference signal is used to indicate a generation sequence of the first reference signal transmitted by each antenna configured by the second node for transmission of the first reference signal.

In some embodiments, the resource information of the first reference signal is used to indicate a transmission power configured by the second node for each antenna for transmission the first reference signal.

In this way, the configuration information for the first reference signal sent by the first node is received, so that the first reference signal may be transmitted based on the configuration information for the first reference signal. The configuration information includes antenna description information for the first reference signal. The antenna description information is used to indicate a mapping relationship between antennas of the second node and antennas of the second node for transmitting the first reference signal. Based on the mapping relationship, the second node may select an antenna for transmitting the first reference signal. Compared with the related art in which the second node uses all antennas to transmit the first reference signal, the embodiments of the present disclosure may reduce the resource overhead for transmitting the first reference signal and improve the flexibility in transmitting the first reference signal, thereby improving the transmission efficiency of the first reference signal.

It may be understood that, in order to implement the functions described above, the communication device includes corresponding hardware structures and/or corresponding software modules for performing various functions. Those skilled in the art will easily realize that the present disclosure may be implemented in the form of hardware or a combination of hardware and computer software, with reference to the algorithm steps of the examples described in the embodiments of the present disclosure. Whether a function is performed by hardware or computer software-driven hardware depends on the specific applications and design constraints of the technical solutions. Professional technicians may use different methods to implement the described functions for each particular application, but such implementation will not be considered beyond the scope of the present disclosure.

In the embodiments of the present disclosure, the communication device may be divided into functional modules according to the method embodiments described above. For example, each functional module may be divided corresponding to each function, or two or more functions may be integrated into one functional module. The integrated module described above may be implemented in the form of hardware or software. It will be noted that the division of modules in the embodiments of the present disclosure is schematic, and is merely a kind of logical function division, and there may be other division manners in actual implementation. The description is given below by considering an example in which each functional module is divided corresponding to each function.

FIG. 10 is a schematic diagram showing a structure of a communication device, applied to the first node, provided in the embodiments of the present disclosure. The communication device 100 may perform the communication method provided in the method embodiments described above. As shown in FIG. 10, the communication device 100 includes a processing module 1001 and a communication module 1002.

The processing module 1001 is configured to generate configuration information for a first reference signal. The configuration information includes antenna description information for the first reference signal. The antenna description information is used to indicate a mapping relationship between N antennas of the second node and X antennas of the second node for transmitting the first reference signal. Herein, N is greater than or equal to 2 and N is a positive integer; X is less than or equal to N and X is a positive integer. The communication module 1002 is configured to transmit the configuration information.

In some embodiments, frequency-domain resources used by Z of the X antennas for transmitting the first reference signal are less than or equal to frequency-domain resources used by the remaining (X - Z) of the X antennas for transmitting the first reference signal. Herein, Z is less than or equal to X, and Z is a positive integer.

In some embodiments, time-domain resources used by Z of the X antennas for transmitting the first reference signal are less than or equal to time-domain resources used by the remaining (X - Z) of the X antennas for transmitting the first reference signal. Herein, Z is less than or equal to X, and Z is a positive integer.

In some embodiments, transmission resources used by Z of the X antennas for transmitting the first reference signal are less than or equal to transmission resources used by the remaining (X - Z) of the X antennas for transmitting the first reference signal. Herein, Z is less than or equal to X, and Z is a positive integer. The transmission resources include frequency-domain resources and time-domain resources.

In some embodiments, transmission powers used by Z of the X antennas for transmitting the first reference signal are less than or equal to transmission powers used by the remaining (X - Z) of the X antennas for transmitting the first reference signal. Herein, Z is less than or equal to X, and Z is a positive integer.

In some embodiments, a generation mode for the first reference signal transmitted by at least one of the X antennas is a first sequence generation mode, and a generation mode for the first reference signal transmitted by at least one of the X antennas is a second sequence generation mode.

In some embodiments, the communication module 1002 is further configured to: in response to Z of the X antennas failing to transmit the first reference signal, receive the first reference signal retransmitted by the second node using the Z antennas. Herein, Z is less than or equal to X and Z is a positive integer.

In some embodiments, a second reference signal is used for path loss calculation for at least one of the X antennas transmitting the first reference signal, and a third reference signal is used for path loss calculation for at least one of the X antennas transmitting the first reference signal.

In some embodiments, the first reference signal includes a sounding reference signal.

In some embodiments, the configuration information further includes at least one of: priority information of the first reference signal, resource information of the first reference signal, sequence information of the first reference signal, or power information of the first reference signal.

In some embodiments, the priority information includes at least one of: a priority relationship between the first reference signal and a signal transmitted on a physical uplink control channel; a priority relationship between the first reference signal and a demodulation reference signal; a priority relationship between the first reference signal and a phase tracking reference signal; or a priority relationship among a plurality of types of first reference signals.

In some embodiments, the communication module 1002 is further configured to receive antenna configuration information of the second node sent by the second node.

In some embodiments, the antenna configuration information includes at least one of: implementations of antennas, position information of antennas, topology structures of antennas, or materials of antennas.

In some embodiments, the communication module 1002 is further configured to receive suggested antenna description information sent by the second node.

FIG. 11 is a schematic diagram showing a structure of a communication device, applied to the second node, provided in the embodiments of the present disclosure. The communication device 110 may perform the communication method provided in the method embodiments described above. As shown in FIG. 11, the communication device 110 includes a communication module 1101 and a processing module 1102.

The communication module 1101 is configured to receive configuration information for a first reference signal. The configuration information includes antenna description information for the first reference signal. The antenna description information is used to indicate a mapping relationship between N antennas of the second node and X antennas of the second node for transmitting the first reference signal. Herein, N is greater than or equal to 2 and N is a positive integer; X is less than or equal to N and X is a positive integer. The processing module 1102 is configured to transmit the first reference signal based on the configuration information.

In some embodiments, frequency-domain resources used by Z of the X antennas for transmitting the first reference signal are less than or equal to frequency-domain resources used by the remaining (X - Z) of the X antennas for transmitting the first reference signal. Herein, Z is less than or equal to X, and Z is a positive integer.

In some embodiments, time-domain resources used by Z of the X antennas for transmitting the first reference signal are less than or equal to time-domain resources used by the remaining (X - Z) of the X antennas for transmitting the first reference signal. Herein, Z is less than or equal to X, and Z is a positive integer.

In some embodiments, transmission resources used by Z of the X antennas for transmitting the first reference signal are less than or equal to transmission resources used by the remaining (X - Z) of the X antennas for transmitting the first reference signal. Herein, Z is less than or equal to X, and Z is a positive integer. The transmission resources include frequency-domain resources and time-domain resources.

In some embodiments, transmission powers used by Z of the X antennas for transmitting the first reference signal are less than or equal to transmission powers used by the remaining (X - Z) of the X antennas for transmitting the first reference signal. Herein, Z is less than or equal to X, and Z is a positive integer.

In some embodiments, a generation mode for the first reference signal transmitted by at least one of the X antennas is a first sequence generation mode, and a generation mode for the first reference signal transmitted by at least one of the X antennas is a second sequence generation mode.

In some embodiments, the communication module 1101 is further configured to: in response to Z of the X antennas failing to transmit the first reference signal, retransmit the first reference signal using the Z antennas. Herein, Z is less than or equal to X and Z is a positive integer.

In some embodiments, a second reference signal is used for path loss calculation for at least one of the X antennas transmitting the first reference signal, and a third reference signal is used for path loss calculation for at least one of the X antennas transmitting the first reference signal.

In some embodiments, the first reference signal includes a sounding reference signal.

In some embodiments, the configuration information further includes at least one of: priority information of the first reference signal, resource information of the first reference signal, sequence information of the first reference signal, or power information of the first reference signal.

In some embodiments, the priority information includes at least one of: a priority relationship between the first reference signal and a signal transmitted on a physical uplink control channel; a priority relationship between the first reference signal and a demodulation reference signal; a priority relationship between the first reference signal and a phase tracking reference signal; or a priority relationship among a plurality of types of first reference signals.

In some embodiments, the communication module 1101 is further configured to transmit antenna configuration information of the second node.

In some embodiments, the antenna configuration information includes at least one of: implementations of antennas, position information of antennas, topology structures of antennas, or materials of antennas.

In some embodiments, suggested antenna description information is transmitted.

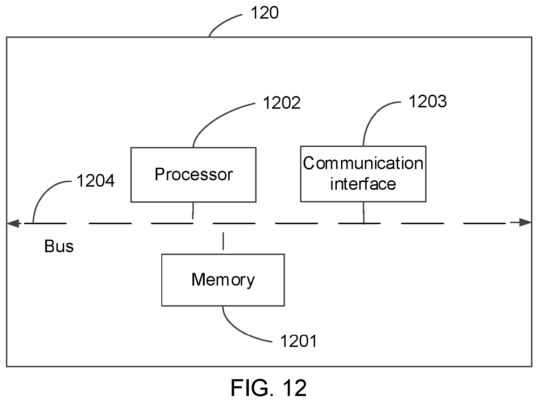

In a case where the functions of the integrated modules described above are implemented in the form of hardware, another possible structure of a communication device involved in the embodiments described above is provided in the embodiments of the present disclosure. As shown in FIG. 12, the communication device 120 includes a processor 1202 and a bus 1204. Optionally, the communication device may further include a memory 1201. Optionally, the communication device may further include a communication interface 1203.

The processor 1202 may implement or execute various exemplary logical blocks, modules, and circuits described with reference to the embodiments of the present disclosure. The processor 1202 may be a central processing unit, a general-purpose processor, a digital signal processor, an application specific integrated circuit, a field programmable gate array, or other programmable logic component, a transistor logic component, a hardware component, or any combination thereof. The processor 1202 may implement or execute various exemplary logical blocks, modules, and circuits described with reference to the embodiments of the present disclosure. The processor 1202 may also be a combination for implementing computing functions, such as a combination of one or more microprocessors, or a combination of a digital signal processor (DSP) and a microprocessor.

The communication interface 1203 is configured to connect with other devices via a communication network. The communication network may be an Ethernet, a radio access network, a wireless local area network (WLAN), or the like.

The memory 1201 may be, but is not limited to, a read-only memory (ROM) or other types of static storage devices capable of storing static information and instructions, a random access memory (RAM) or other types of dynamic storage devices capable of storing information and instructions, or an electrically erasable programmable read-only memory (EEPROM), a magnetic disk storage medium or other magnetic storage device, or any other medium capable of being used to carry or store desired program codes and capable of being accessed by a computer, where the desired program codes have instructions or are in the form of data structure.

As a possible implementation, the memory 1201 may exist independently of the processor 1202, and the memory 1201 may be connected to the processor 1202 via the bus 1204 and configured to store instructions or program codes. When invoking and executing the instructions or program codes stored in the memory 1201, the processor 1202 may perform the communication method provided in the embodiments of the present disclosure.

In another possible implementation, the memory 1201 may also be integrated with the processor 1202.

The bus 1204 may be an extended industry standard architecture (EISA) bus or the like. The bus 1204 may be classified as an address bus, a data bus, a control bus, and the like. For convenience of representation, only one bold line is used in FIG. 12, but this does not mean that there is only one bus or only one type of bus.

A computer-readable storage medium (e.g., a non-transitory computer-readable storage medium) is provided in some embodiments of the present disclosure. The computer-readable storage medium has stored computer program instructions. When the computer program instructions are run on a computer, the computer is enabled to perform the communication method as described in any one of the embodiments described above

For example, the computer-readable storage medium may include, but is not limited to: a magnetic storage device (e.g., a hard disk, a floppy disk, or a magnetic tape), an optical disk (e.g., a compact disk (CD), a digital versatile disk (DVD)), a smart card, and a flash memory device (e.g., an erasable programmable read-only memory (EPROM), a card, a stick, or a key driver). The computer-readable storage media described in the present disclosure may represent one or more devices and/or other machine-readable storage media for storing information. The term "machine-readable storage medium" may include, but is not limited to, radio channels and various other media capable of storing, containing, and/or carrying instructions and/or data.

A computer program product including instructions is provided in the embodiments of the present disclosure. When the computer program product is run on a computer, the computer is enabled to perform the communication method as described in any one of the embodiments described above.

The above are merely specific implementations of the present disclosure, but the protection scope of the present disclosure is not limited thereto. Any variations or replacements within the technical scope disclosed in the present disclosure will fall within the protection scope of the present disclosure. Therefore, the protection scope of the present disclosure will be subject to the protection scope of the claims.

## Claims

1. A communication method, applied to a first node, and comprising:
generating configuration information for a first reference signal; wherein the configuration information includes antenna description information for the first reference signal, the antenna description information is used to indicate a mapping relationship between N antennas of a second node and X antennas of the second node for transmitting the first reference signal, N is greater than or equal to 2 and N is a positive integer, and X is less than or equal to N and X is a positive integer; and
transmitting the configuration information.

2. The method according to claim 1, wherein frequency-domain resources used by Z of the X antennas for transmitting the first reference signal are less than or equal to frequency-domain resources used by remaining (X - Z) of the X antennas for transmitting the first reference signal, Z is less than or equal to X, and Z is a positive integer.

3. The method according to claim 1, wherein time-domain resources used by Z of the X antennas for transmitting the first reference signal are less than or equal to time-domain resources used by remaining (X - Z) of the X antennas for transmitting the first reference signal, Z is less than or equal to X, and Z is a positive integer.

4. The method according to claim 1, wherein transmission resources used by Z of the X antennas for transmitting the first reference signal are less than or equal to transmission resources used by remaining (X - Z) of the X antennas for transmitting the first reference signal, wherein Z is less than or equal to X, and Z is a positive integer, and the transmission resources include frequency-domain resources and time-domain resources.

5. The method according to claim 1, wherein transmission powers used by Z of the X antennas for transmitting the first reference signal are less than or equal to transmission powers used by remaining (X - Z) of the X antennas for transmitting the first reference signal, Z is less than or equal to X, and Z is a positive integer.

6. The method according to claim 1, wherein a generation mode for the first reference signal transmitted by at least one of the X antennas is a first sequence generation mode, and a generation mode for the first reference signal transmitted by at least one of the X antennas is a second sequence generation mode.

7. The method according to claim 1, further comprising:
receiving, in response to Z of the X antennas failing to transmit the first reference signal, the first reference signal retransmitted by the second node using the Z antennas, wherein Z is less than or equal to X and Z is a positive integer.

8. The method according to claim 1, wherein a second reference signal is used for path loss calculation for at least one of the X antennas transmitting the first reference signal, and a third reference signal is used for path loss calculation for at least one of the X antennas transmitting the first reference signal.

9. The method according to any one of claims 1 to 8, wherein the first reference signal includes a sounding reference signal.

10. The method according to claim 1, wherein the configuration information further includes at least one of: priority information of the first reference signal, resource information of the first reference signal, sequence information of the first reference signal, or power information of the first reference signal.

11. The method according to claim 10, wherein the priority information includes at least one of:
a priority relationship between the first reference signal and a signal transmitted on a physical uplink control channel;
a priority relationship between the first reference signal and a demodulation reference signal;
a priority relationship between the first reference signal and a phase tracking reference signal; or
a priority relationship among a plurality of types of first reference signals.

12. The method according to claim 1, further comprising:
receiving antenna configuration information of the second node sent by the second node.

13. The method according to claim 12, wherein the antenna configuration information includes at least one of: implementations of antennas, position information of the antennas, topology structures of the antennas, or materials of the antennas.

14. The method according to claim 1, further comprising:
receiving suggested antenna description information sent by the second node.

15. A communication method, applied to a second node, and comprising:
receiving configuration information for a first reference signal; wherein the configuration information includes antenna description information for the first reference signal, the antenna description information is used to indicate a mapping relationship between N antennas of the second node and X antennas of the second node for transmitting the first reference signal, N is greater than or equal to 2 and N is a positive integer, X is less than or equal to N and X is a positive integer; and
transmitting the first reference signal based on the configuration information.

16. The method according to claim 15, wherein frequency-domain resources used by Z of the X antennas for transmitting the first reference signal are less than or equal to frequency-domain resources used by remaining (X - Z) of the X antennas for transmitting the first reference signal, Z is less than or equal to X, and Z is a positive integer.

17. The method according to claim 15, wherein time-domain resources used by Z of the X antennas for transmitting the first reference signal are less than or equal to time-domain resources used by remaining (X - Z) of the X antennas for transmitting the first reference signal, Z is less than or equal to X, and Z is a positive integer.

18. The method according to claim 15, wherein transmission resources used by Z of the X antennas for transmitting the first reference signal are less than or equal to transmission resources used by remaining (X - Z) of the X antennas for transmitting the first reference signal, wherein Z is less than or equal to X, and Z is a positive integer, and the transmission resources include frequency-domain resources and time-domain resources.

19. The method according to claim 15, wherein transmission powers used by Z of the X antennas for transmitting the first reference signal are less than or equal to transmission powers used by remaining (X - Z) of the X antennas for transmitting the first reference signal, Z is less than or equal to X, and Z is a positive integer.

20. The method according to claim 15, wherein a generation mode for the first reference signal transmitted by at least one of the X antennas is a first sequence generation mode, and a generation mode for the first reference signal transmitted by at least one of the X antennas is a second sequence generation mode.

21. The method according to claim 15, further comprising:
retransmitting, in response to Z of the X antennas failing to transmit the first reference signal, the first reference signal using the Z antennas, wherein Z is less than or equal to X and Z is a positive integer.

22. The method according to claim 15, wherein a second reference signal is used for path loss calculation for at least one of the X antennas transmitting the first reference signal, and a third reference signal is used for path loss calculation for at least one of the X antennas transmitting the first reference signal.

23. The method according to any one of claims 15 to 22, wherein the first reference signal includes a sounding reference signal.

24. The method according to claim 15, wherein the configuration information further includes at least one of: priority information of the first reference signal, resource information of the first reference signal, sequence information of the first reference signal, or power information of the first reference signal.

25. The method according to claim 24, wherein the priority information includes at least one of:
a priority relationship between the first reference signal and a signal transmitted on a physical uplink control channel;
a priority relationship between the first reference signal and a demodulation reference signal;
a priority relationship between the first reference signal and a phase tracking reference signal; or
a priority relationship among a plurality of types of first reference signals.

26. The method according to claim 15, further comprising:
transmitting antenna configuration information of the second node.

27. The method according to claim 26, wherein the antenna configuration information includes at least one of: implementations of antennas, position information of the antennas, topology structures of the antennas, or materials of the antennas.

28. The method according to claim 15, further comprising:
transmitting suggested antenna description information.

29. A communication device, comprising a processor, wherein the processor, upon executing a computer program, performs the communication method according to any one of claims 1 to 14 or the communication method according to any one of claims 15 to 28.

30. A computer-readable storage medium, having stored computer instructions that, when being executed, perform the communication method according to any one of claims 1 to 14 or the communication method according to any one of claims 15 to 28.
